Europäisches Patentamt

European Patent Office

Office européen des brevets

(19)

(11) Numéro de publication: **0 135 434**
**A1**

(12) # DEMANDE DE BREVET EUROPEEN

(21) Numéro de dépôt: 84401687.3

(22) Date de dépôt: 17.08.84

(51) Int. Cl.⁴: **B 23 Q 35/24**
**B 23 K 9/02**

(30) Priorité: 22.08.83 FR 8313543

(43) Date de publication de la demande:
27.03.85 Bulletin 85/13

(84) Etats contractants désignés:
DE GB IT SE

(71) Demandeur: COMMISSARIAT A L'ENERGIE ATOMIQUE Etablissement de Caractère Scientifique Technique et Industriel
31/33, rue de la Fédération
F-75015 Paris(FR)

(72) Inventeur: Detriche, Jean-Marie
38, rue de Tourville
F-78100 Saint Germain en Laye(FR)

(72) Inventeur: Fraize, Gérard
82, rue de Fresnes
F-94240 L'Haye Les Roses(FR)

(72) Inventeur: Rouget, Jean-Paul
19, rue de la Ménantille
F-88100 Saint-Die(FR)

(74) Mandataire: Mongrédien, André et al,
c/o BREVATOME 25, rue de Ponthieu
F-75008 Paris(FR)

(54) Dispositif de supportage d'un capteur pour une machine automatique et son application à une telle machine.

(57) L'invention concerne un dispositif de supportage constituant une liaison à au moins trois degrés de liberté entre une machine automatique asservie à suivre un joint (12) et une capteur (10) assurant le suivi du joint.

Le capteur (10) est monté à l'extrémité inférieure d'une colonne (34), de façon à pouvoir pivoter ($\theta_6$) autour d'une axe passant par le milieu de la base du capteur, perpendiculairement au plan de travail de celui-ci. La colonne (34) est supportée par une platine (24) de façon à pouvoir tourner autour de son axe et à pouvoir se déplacer parallèlement à celui-ci. Enfin, la platine (24) peut pivoter autour d'un axe (22) perpendiculaire à l'axe de la colonne, par rapport à une platine (20) par laquelle le dispositif est relié à la machine. Lorsque celle-ci est un robot de soudage, le soudage multipasse est ainsi réalisable.

EP 0 135 434 A1

./...

Croydon Printing Company Ltd.

FIG. 2

0135434

Dispositif de supportage d'un capteur pour une machine automatique et son application à une telle machine.

La présente invention concerne un dispositif de supportage d'un capteur de suivi de joint pour une machine automatique telle qu'une machine de soudage de deux pièces selon ce joint, asservie à une mesure de position du joint effectuée par le capteur. Elle s'applique également à d'autres types de capteurs, aptes à détecter une forme, une discontinuité, etc..., par exemple à des détecteurs de profil. L'invention a également pour objet une machine automatique comportant un tel dispositif de supportage.

L'expression "capteur de suivi de joint" doit être prise dans son sens le plus large et désigne tout capteur ou groupe de capteurs délivrant au moins un signal représentatif de la position latérale du capteur par rapport au joint, afin d'asservir la machine à suivre ce joint. Il peut notamment s'agir d'un capteur sans contact tel qu'un capteur ou un groupe de capteurs à courants de Foucault. Toutefois, tout autre type de capteur connu peut également être monté sur le dispositif de supportage selon l'invention.

Dans les machines ou robots de soudage automatique de deux pièces selon une ligne de joint, la position de la torche de soudage est asservie à une consigne préalablement mise en mémoire, par exemple à la suite d'un apprentissage préalable. Toutefois, les défauts de reproductibilité des pièces, ou les conditions de température dans lesquelles se déroule le soudage conduisent généralement à une certaine déformation des pièces par rapport à la consigne, ce qui nécessite de corriger légèrement la trajectoire de la torche en cours de soudage. Afin de réaliser cette correction fine, il est souhaitable de placer légèrement en avant de la torche, mais de façon aussi proche que possible de celle-ci, un ou plusieurs capteurs permettant de

B 7889.3 GP

mettre en évidence un éventuel décalage du joint par rapport à la trajectoire suivie par la torche. Les informations fournies par le capteur sont utilisées pour commander l'asservissement de la torche, afin de réaliser une correction fine de la trajectoire suivie par celle-ci.

Dans l'état actuel de la technique, les machines de soudage automatique fonctionnant selon ce principe sont de deux types.

Tout d'abord, beaucoup de robots de soudage utilisés actuellement sont des robots du type à bras articulé, dans lesquels les degrés de liberté de positionnement et d'orientation sont combinés. Ces robots ne sont pas spécialement conçus pour le soudage, mais pour la manutention, de sorte qu'ils ne comprennent généralement que cinq degrés de liberté. De tels robots sont donc rarement prévus pour utiliser des capteurs de suivi de joint qui nécessitent d'être orientés en permanence devant la torche.

Il existe aussi des robots conçus spécialement pour le soudage et dans lesquels les degrés de liberté d'orientation et de position sont découplés. Ces robots comprennent deux parties nettement distinctes qui sont, d'une part, un ensemble porteur assurant le positionnement de la torche dans l'espace et, d'autre part, un ensemble de supportage de la torche assurant l'orientation de celle-ci. L'ensemble porteur peut présenter différentes formes selon la nature des mouvements permettant d'assurer le positionnement de la torche. Ainsi, il existe des ensembles porteurs de types cartésien, cylindrique, ou polyarticulé à double parallélogramme, ces ensembles porteurs ayant tous pour point commun de maintenir constante l'orientation de leur dernier segment. En ce qui concerne l'ensemble de supportage de la torche, différentes réalisations sont possibles telles que celle qui est décrite dans le brevet européen n° 8105594 des Ateliers et Chantiers de Bretagne ou que celle du robot de soudure PW 752 de la Société japonaise SHIN MEIWA.

Jusqu'à présent, la complexité des mécaniques des robots et la quasi absence de système de suivi de joint n'ont donc pas encore débouché sur des produits industriels permettant un suivi de joint en cours de soudage.

De plus, et dans l'un et l'autre types de robots de soudage mentionnés précédemment, il n'a jamais été envisagé de pouvoir régler l'orientation de la torche de soudage indépendamment de celle du capteur de suivi de joint. Cependant, certaines opérations telles que le soudage multipasse nécessitent d'incliner selon différents angles la torche de soudage par rapport aux surfaces des pièces à souder, alors que le bon fonctionnement de la plupart des capteurs de suivi de joint nécessite de maintenir ceux-ci selon une orientation parfaitement constante par rapport à ces pièces. Le soudage multipasse, qui est une opération relativement fréquente dans l'industrie, ne peut donc être réalisé par aucun des robots munis de systèmes de suivi de joint connus à ce jour.

Bien que l'invention soit particulièrement adaptée au cas du soudage automatique de deux pièces à l'aide d'un robot, elle n'est cependant pas limitée à cette application et peut également être utilisée dans une machine d'usinage et plus généralement dans toute machine automatique dans laquelle il est nécessaire de suivre une discontinuité de surface et dans laquelle il est souhaitable de réaliser des corrections de trajectoire du second ordre pour tenir compte de certaines déformations des pièces inhérentes aux conditions opératoires.

B 7889.3 GP

La présente invention a précisément pour objet un dispositif permettant de relier une machine automatique et un capteur de suivi de joint, ce dispositif étant conçu de façon à permettre le soudage multipasse et le suivi d'un joint, tout en pouvant s'adapter sur tous les types de robots comportant un nombre de degrés de liberté suffisant.

A cet effet et conformément à l'invention, il est proposé un dispositif de supportage d'un capteur de suivi de joint pour une machine automatique telle qu'une machine de soudage de deux pièces selon ce joint, asservie à une mesure de position du joint effectuée par ledit capteur, caractérisé en ce qu'il comprend une platine de fixation du capteur sur la machine, des moyens pour déplacer le capteur par rapport à la platine selon une première direction de mesure de hauteur, des moyens pour déplacer le capteur par rapport à la platine selon une deuxième direction de mesure de décalage latéral, perpendiculaire à la première direction, et des moyens pour faire pivoter le capteur autour d'un premier axe orthogonal aux première et deuxième directions et passant par un point lié au capteur.

Afin de faciliter la réalisation mécanique du dispositif et de réduire son encombrement, les moyens pour déplacer le capteur par rapport à la platine selon la première et la deuxième direction comprennent des moyens pour faire pivoter le capteur autour d'un deuxième axe sensiblement parallèle au premier axe et plus éloigné du capteur que ce dernier.

Conformément à un mode de réalisation préféré de l'invention, le dispositif de supportage défini précédemment comporte plusieurs pièces mobiles reliées entre elles successivement, de ladite platine vers le capteur, par une articulation de rotation autour du deuxième axe, par des moyens de guidage en translation selon une troisième direction perpendiculaire au deuxième axe et par une articulation de rotation autour du premier axe, les déplacements desdites pièces au niveau desdites articulations et des moyens de guidage étant commandés par chacun desdits moyens pour déplacer et pour faire pivoter le capteur.

De préférence, le dispositif selon l'invention comprend de plus des moyens pour faire pivoter le capteur autour d'un troisième axe perpendiculaire au premier et au deuxième axes et parallèle à ladite troisième direction. Dans ce cas, une articulation de rotation autour du troisième axe est prévue entre l'articulation de rotation autour du deuxième axe et les moyens de guidage en translation. Ce mouvement se combine avec deux autres mouvements pour permettre d'escamoter le capteur lorsque cela s'avère nécessaire.

Afin d'assurer la commande de l'asservissement de l'ensemble, des moyens sont prévus pour mesurer les déplacements relatifs entre lesdites pièces au niveau desdites articulations et des moyens de guidage en translation.

Selon une première application, l'invention a également pour objet une machine automatique comprenant un ensemble porteur définissant au moins trois degrés de liberté de positionnement, un ensemble de supportage d'un outil définissant au moins deux degrés de liberté d'orientation, ledit ensemble de supportage comprenant un bras d'axe vertical par lequel il est monté à l'extrémité de l'ensemble porteur, et un dispositif de supportage d'un capteur, caractérisée en ce que ladite platine est montée sur ledit bras de l'ensemble de supportage par une articulation de rotation autour de l'axe vertical du bras, des moyens étant prévus pour faire pivoter le dispositif de supportage autour de cet axe vertical.

B 7889.3 GP

6     0135434

Dans ce cas, la platine est montée de préférence à l'extrémité inférieure du bras de l'ensemble de supportage, afin de réduire l'encombrement du dispositif de supportage du capteur.

Selon une autre application, l'invention a aussi pour objet une machine automatique comprenant un ensemble porteur définissant au moins six degrés de liberté de positionnement et d'orientation combinés, un outil monté à l'extrémité dudit ensemble porteur, et un dispositif de supportage d'un capteur, caractérisée en ce que le dispositif de supportage du capteur est fixé avec l'outil à l'extrémité de l'ensemble porteur.

On décrira maintenant, à titre d'exemple non limitatif, un mode de réalisation particulier de l'invention en se référant aux dessins annexés dans lesquels :

- la figure 1a représente de façon schématique, dans le plan de balayage perpendiculaire au joint, un capteur de suivi de joint placé en vis-à-vis du joint formé entre deux pièces à souder et illustre les différents mouvements que la liaison entre le capteur et le robot de soudage doit permettre de réaliser,

- la figure 1b est une vue en perspective illustrant de façon très schématique le principe de réalisation du dispositif de supportage selon l'invention,

- la figure 2 est une vue de côté, en coupe partielle, d'un exemple de réalisation du dispositif de supportage selon l'invention,

- la figure 3 est une vue de face, en coupe partielle, du dispositif de supportage de la figure 2,

- la figure 4 est une vue schématique illustrant l'application du dispositif de supportage de capteur selon l'invention à un robot de soudage comportant un ensemble porteur dans lequel les degrés de liberté de positionnement et d'orientation sont combinés,

B 7889.3 GP

- la figure 5 est une vue de côté schématique comparable à la figure 4 illustrant l'application du dispositif de supportage selon l'invention à un robot de soudage dans lequel les mouvements de positionnement et d'orientation de la torche sont découplés, l'orientation de la torche étant ici réalisée de la même manière que dans le robot PW 752 de la Société japonaise SHIN MEIWA, et

- la figure 6 est une vue en perspective et en coupe partielle illustrant l'application du dispositif de supportage selon l'invention à un robot de soudage dans lequel les mouvements de positionnement et d'orientation de la torche sont découplés et dans lequel l'orientation de la torche est réalisée par des moyens comparables à ceux qui sont décrits dans la demande de brevet européen n° 8105594 des Ateliers et Chantiers de Bretagne.

Comme l'illustre la figure 1a, le dispositif de supportage selon l'invention doit permettre d'orienter à volonté le capteur 10 par rapport au joint 12 formé entre les pièces 14 et 16 à souder, indépendamment de l'orientation de la torche dans le plan transversal au joint. Si l'on associe au capteur un repère de référence OXYZ dans lequel le joint O étant situé au milieu de la base 10a du capteur, les axes sont définis comme suit :

- $\overrightarrow{OX}$ : direction de déplacement du capteur résultant du déplacement du porteur le long du joint,
- $\overrightarrow{OY}$ : direction de mesure d'écart latéral du capteur, perpendiculairement à $\overrightarrow{OX}$ et à l'axe longitudinal du capteur,
- $\overrightarrow{OZ}$ : direction de mesure de hauteur du capteur selon l'axe longitudinal de celui-ci,

le dispositif de supportage ou de liaison selon l'in-

B 7889.3 GP

vention doit présenter les trois degrés de liberté suivants :

- translation du capteur selon la direction $\vec{OZ}$,

- translation du capteur selon la direction $\vec{OY}$,

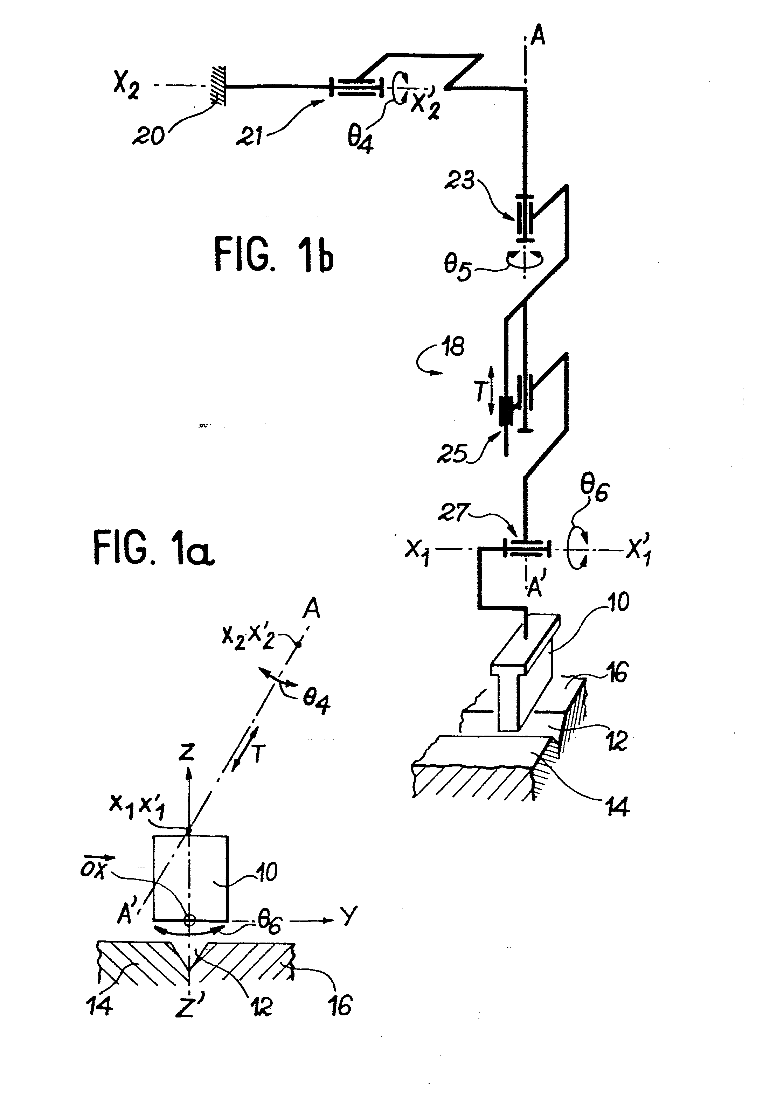

- pivotement $\theta_6$ du capteur autour d'un axe $X_1X_1'$ parallèle à l'axe $\vec{OX}$ et situé mécaniquement au dessus du capteur, comme l'illustre la figure 1b.

Dans la suite de la description, on appellera "plan de travail du capteur" le plan formé par les axes $\vec{OY}$ et $\vec{OZ}$.

Dans la pratique et comme l'illustre la figure 1b, les translations du capteur selon les directions $\vec{OZ}$ et $\vec{OY}$ sont obtenues en combinant le pivotement $\theta_6$ avec un autre pivotement $\theta_4$ et avec une translation T.

Le pivotement $\theta_4$ est réalisé autour d'un axe $X_2X_2'$ normalement parallèle à l'axe $X_1X_1'$ et aussi éloigné que possible du joint 12.

La translation T s'effectue quant à elle selon une direction AA' décalée de l'axe $\vec{OZ}$ de la valeur du décalage imposé par la rotation $\theta_6$. L'axe de translation AA' peut être défini comme un axe coupant les axes $X_2X'_2$ et $X_1X'_1$ perpendiculairement à ceux-ci, et passant par le centre O de la base du capteur.

On conçoit qu'une combinaison des mouvements $\theta_4$, $\theta_6$ et T permet d'obtenir les translations souhaitées du capteur selon les directions $\vec{OY}$ et $\vec{OZ}$.

A ces mouvements de translation T et de rotation $\theta_4$ et $\theta_6$ est ajouté de préférence un mouvement de rotation $\theta_5$ du capteur 10 autour de l'axe AA' selon lequel s'effectue la translation T. Comme on le verra ultérieurement, la combinaison de cette rotation $\theta_5$ avec les rotations $\theta_6$, $\theta_4$ et la translation T permet de replier ou d'escamoter le capteur 10 lorsque certains points singuliers tels que des angles intérieurs, etc..., doivent être franchis.

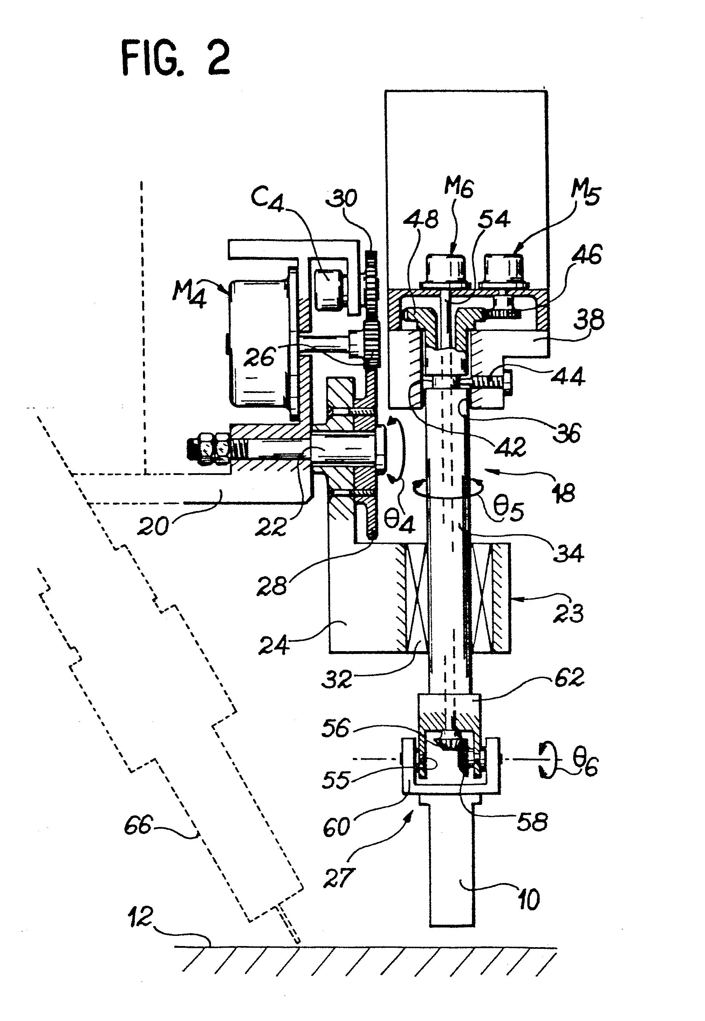

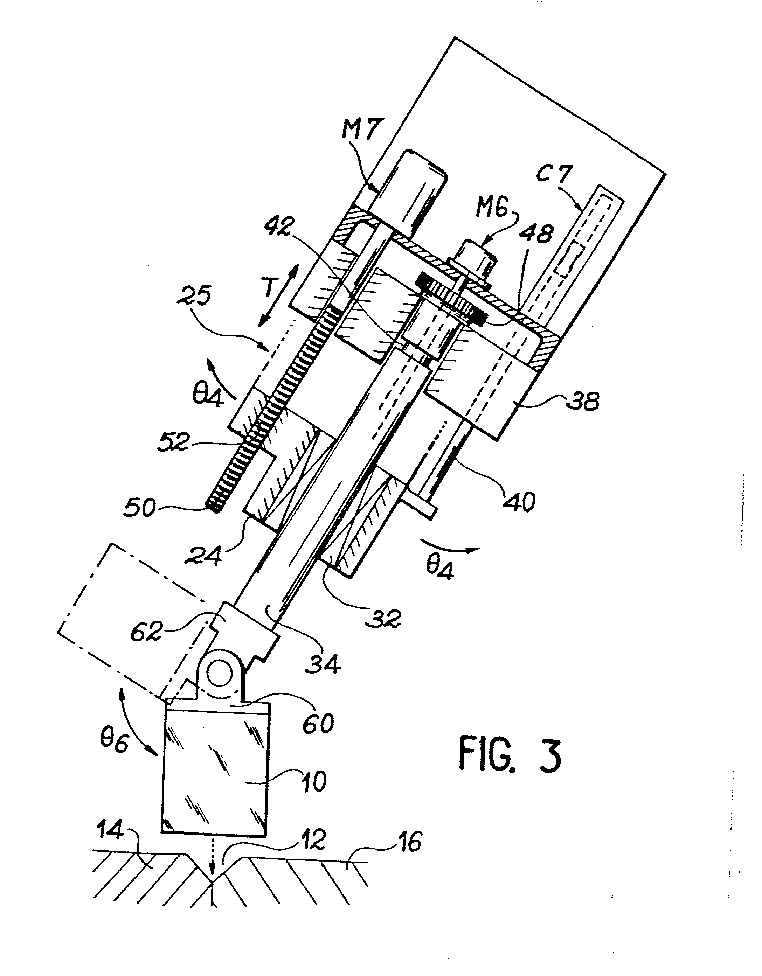

Si l'on se réfère à la figure 1b, on voit que le dispositif de supportage 18 du capteur 10 selon l'invention comporte une platine 20 par laquelle il est monté sur le robot de soudage d'une manière qui sera décrite ultérieurement, et un certain nombre de pièces mobiles qui seront décrites par la suite en se référant aux figures 2 et 3. Ces pièces sont reliées entre elles successivement, de la platine 20 vers le capteur 10, par une articulation 21 permettant le pivotement $\theta_4$ autour de l'axe $X_2X_2'$, par une articulation 23 permettant le pivotement $\theta_5$ autour de l'axe AA', par des moyens de guidage 25 permettant le mouvement de translation T selon ce même axe et par une articulation 27 permettant la rotation $\theta_6$ autour de l'axe $X_1X_1'$.

Un exemple de réalisation pratique de ce dispositif de supportage 18 sera maintenant décrit en se référant à la figure 2.

Ainsi, on voit sur la figure 2 que la platine 20 par laquelle ce dispositif est fixé au robot supporte un axe horizontal 22 définissant l'articulation 21 et sur lequel est monté de façon tournante une deuxième platine 24. La platine 20 supporte également un moteur couple $M_4$ servant à commander la rotation de la platine 24 autour de l'axe 22. A cet effet, l'arbre de sortie du moteur $M_4$, qui est parallèle à l'axe 22, porte un pignon 26 qui s'engrène sur un pignon 28 solidaire de la platine 24 et d'axe confondu avec celui de l'axe 22. Il est à noter que la démultiplication obtenue entre les pignons 26 et 28 est suffisamment faible pour limiter les jeux mécaniques et donc les imprécisions de positionnement du capteur 10.

La platine 20 supporte également un codeur de position $C_4$ tel qu'un capteur potentiométrique. Ce codeur de position $C_4$ est commandé par un pignon 30, d'axe parallèle à celui de l'axe 22, également engrené sur le pignon 26.

B 7889.3 GP

La platine 24 est munie d'une douille à bille 32 dans laquelle est reçu un arbre ou colonne 34, d'axe perpendiculaire à celui de l'axe horizontal 22, apte à coulisser et à tourner à l'intérieur de la platine 24 pour permettre la translation T et définir l'articulation 23.

A son extrémité supérieure, la colonne 34 est reçue de façon tournante dans un alésage 36 formé dans une platine 38, elle-même immobilisée en rotation par une tige filetée 50 parallèle à l'axe de la colonne 34, et servant à commander la translation de la platine T, comme on le verra ultérieurement. La tige filetée 50 définit avec la colonne 34 les moyens de guidage 25. En revanche, la platine 38 est immobilisée en translation par rapport à la colonne 34 par une gorge 42 formée sur cette dernière et dans laquelle est reçu un téton formé à l'extrémité d'une vis 44 fixée sur la platine 38.

Afin de pouvoir commander la rotation $\theta_5$ de la colonne 34 autour de son axe propre, la platine 38 supporte un moteur couple $M_5$ dont l'arbre de sortie, d'axe parallèle à celui de la colonne 34, porte un pignon 46 qui s'engrène sur un pignon 48 solidaire de l'extrémité supérieure de la colonne 34. Etant donné que la platine 38 est immobilisée en rotation par rapport à la platine 24 sous l'effet combiné de la colonne 34 et de la tige filetée 50, la mise en oeuvre du moteur $M_5$ a pour effet de faire tourner la colonne 34 autour de son axe propre, pour réaliser la rotation $\theta_5$.

Comme l'illustre la figure 3, la platine 38 supporte également un moteur couple $M_7$ dont l'arbre de sortie, d'axe parallèle à celui de la colonne 34, se prolonge par la tige filetée 50 reçue dans un taraudage 52 formé dans la platine 24. Grâce à cette disposition, la mise en oeuvre du moteur $M_7$ a pour effet de rapprocher ou d'éloigner la platine 38 de la platine 24 ou,

B 7889.3 GP

en d'autres termes, de commander la translation T de la colonne 34 portant le capteur 10 dans l'un ou l'autre sens, selon son axe propre.

La platine 38 supporte en outre un capteur potentiométrique linéaire $C_7$ relié à la platine 24 par une colonne 40 parallèle à l'axe de la colonne 34.

Si l'on se réfère à nouveau à la figure 2, on voit qu'à l'extrémité inférieure de la colonne 34 est fixée une platine en forme de fourche 62 sur laquelle est articulée de façon tournante autour d'un axe 55 perpendiculaire à l'axe de la colonne 34 et à l'axe longitudinal du capteur 10, une autre platine en forme de fourche 60 sur laquelle est fixé le capteur. L'axe 55 définit ainsi l'articulation 27.

De plus, la colonne 34 est creuse et traversée par l'arbre 54, d'axe confondu avec celui de la colonne 34, d'un moteur couple $M_6$ supporté par la platine 38. Cet arbre 54 porte à son extrémité inférieure et en saillie par rapport à l'extrémité inférieure de la colonne 34 un pignon conique 56 qui vient s'engrener sur un autre pignon conique 58, dont l'axe 55 est solidaire de la platine 60. Le moteur $M_6$ permet ainsi de commander la rotation $\theta_6$ du capteur 10 autour de l'axe 55 du pignon 58.

Afin de pouvoir connaître l'amplitude de chacun des mouvements commandés par les moteurs $M_4$ à $M_6$, des codeurs de position tels que des capteurs potentiométriques sont entraînés par chacun de ces moteurs, d'une façon comparable à celle qui a été décrite pour les capteurs $C_4$ et $C_7$.

Grâce à la structure du dispositif de supportage du capteur 10 qui vient d'être décrit, on comprend que la mise en oeuvre combinée d'un ou plusieurs des moteurs $M_4$, $M_6$ et $M_7$ permet d'orienter et de positionner à volonté le capteur 10 par rapport au joint indépendamment de l'orientation dans le plan transversal au joint de la partie du robot de soudage sur laquelle est fixée la platine 20. On voit aussi sur les figures 2 et 3 qu'il est possible de réaliser le dispositif de supportage selon l'invention de façon particulièrement compacte, et de lui conférer un encombrement très faible à proximité de la torche 66, représentée en traits discontinus sur la figure 2.

Lorsqu'il est nécessaire d'escamoter le capteur, par exemple pour le passage d'un point singulier sur les pièces à souder, cela peut être fait simplement de la manière suivante :

- mise en oeuvre du moteur $M_7$ afin de commander la translation T dans le sens de la montée du capteur 10, jusqu'à ce que la platine 62 vienne en butée sur la face intérieure de la platine 24,

- mise en oeuvre du moteur $M_6$ afin de commander la rotation $\theta_6$, de manière à amener l'axe longitudinal du capteur sensiblement perpendiculaire à l'axe de la colonne 34, comme on l'a représenté en traits mixtes sur la figure 3,

- mise en oeuvre du moteur $M_5$ commandant la rotation $\theta_5$, afin d'amener l'axe longitudinal du capteur dans le plan perpendiculaire au plan de détection.

Dans la pratique, les moteurs $M_5$, $M_6$ et $M_7$ seront mis en oeuvre de façon combinée afin que le mouvement global effectué par le capteur soit plus rapide et afin de limiter le champ débattu par l'extrémité du capteur.

Comme on l'a déjà mentionné précédemment, le dispositif de supportage de capteur selon l'invention peut être utilisé dans tous les cas où le robot de soudage présente le nombre de degrés de liberté nécessaire à l'utilisation des capteurs de suivi de joint et cela quelle que soit la structure du robot.

B 7889.3 GP

0135434

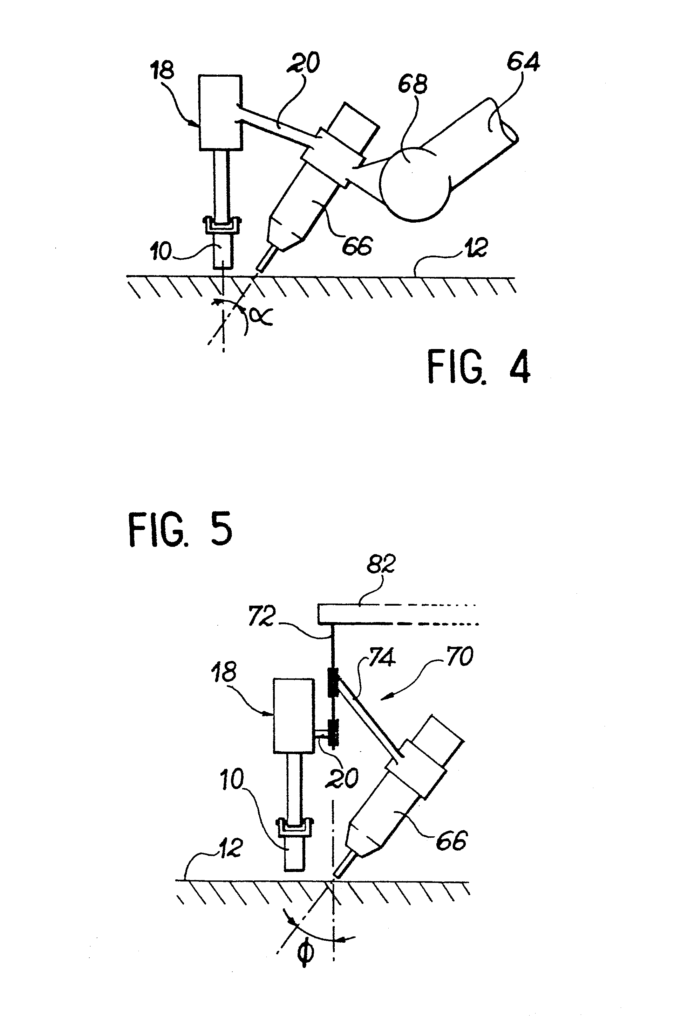

Ainsi, on a représenté de façon schématique sur la figure 4 l'application du dispositif de supportage 18 selon l'invention à un robot de soudage dans lequel les degrés de liberté d'orientation et de position sont couplés. Afin de satisfaire à la condition énoncée précédemment, un tel robot doit présenter six degrés de liberté dans le cas général. Ces robots sont les robots du type généralement utilisé en manipulation et ils comprennent un certain nombre de bras articulés. Pour simplifier, seul le dernier bras 64 a été représenté sur la figure 4, sur laquelle on voit par ailleurs que ce bras 64 supporte la torche de soudage 66 par l'intermédiaire d'un poignet 68. Dans ce cas, la platine 20 du dispositif 18 supportant le capteur 10 est fixée directement sur le poignet 68 ou sur la torche 66. Dans ce cas, on remarquera que l'angle α formé entre le plan de détection balayé par le capteur 10 et l'axe de la torche 66 doit être adapté en fonction des applications.

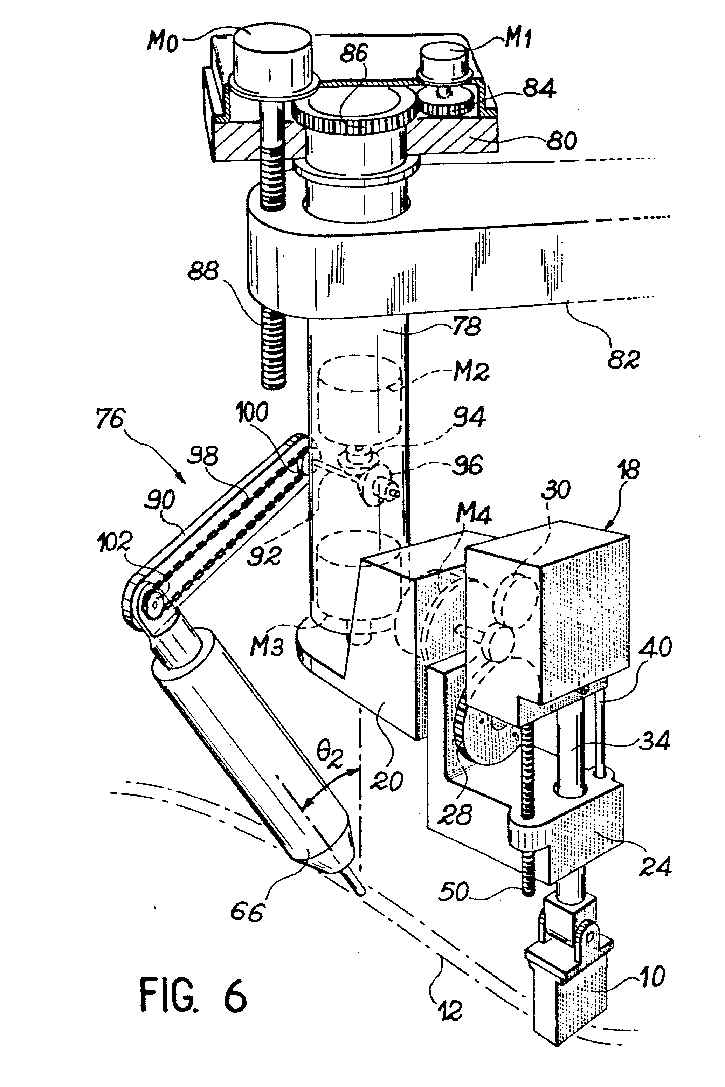

Sur les figures 5 et 6, on a représenté deux applications du dispositif de supportage selon l'invention à des robots de soudage dans lesquels le positionnement dans l'espace et l'orientation de la torche sont découplés. Dans les deux cas, le positionnement de la torche peut être réalisé par tout ensemble de positionnement connu présentant les trois degrés de liberté de positionnement requis. En conséquence, seule l'extrémité 82 de cet ensemble porteur a été représentée sur les figures 5 et 6.

Sur la figure 5, l'ensemble de supportage 70 de la torche 66 est réalisé comme dans le robot PW 752 de la Société japonaise SHIN MEIWA. Dans ce robot connu, l'ensemble de supportage 70 comporte un bras ou colonne 72, d'axe vertical, par lequel il est monté à l'extrémité 82 de l'ensemble porteur. Ce bras supporte la torche 66 par l'intermédiaire d'un bras incliné 74 articulé de façon à pouvoir tourner autour de l'axe vertical du bras, de telle sorte que l'extrémité inférieure de la torche soit toujours située dans le prolongement de cet axe. De plus, des moyens (non représentés) sont prévus pour faire varier à volonté l'angle $\emptyset$ entre l'axe de la torche 66 et l'axe vertical de rotation du bras 74 autour du bras 72.

Comme l'illustre la figure 5, le montage du dispositif de supportage 18 selon l'invention sur un robot de ce type est réalisé en montant la platine 20 de façon tournante autour de l'axe vertical du bras 72 de l'ensemble porteur 70. A cet effet, un autre moteur (non représenté) est nécessaire.

Afin de réaliser des déplacements précis du capteur, la distance séparant le point de montage du dispositif 18 sur le robot de l'extrémité inférieure du capteur doit être aussi faible que possible. Pour cette raison, la platine 20 sera montée tournante sur le bras vertical 72 de préférence en-dessous du bras 74, comme l'illustre la figure 5.

Enfin, on a représenté sur la figure 6 l'application du dispositif de supportage 18 selon l'invention à un robot de soudage dans lequel l'ensemble de supportage assurant l'orientation de la torche 66 dans l'espace est un ensemble 76 réalisé conformément aux enseignements du brevet européen n° 8105594 au nom de la Société des Ateliers et Chantiers de Bretagne.

Comme on l'a représenté sur la figure 6, cet ensemble 76 comporte un bras ou colonne 78 apte à tourner autour de son axe vertical propre sous l'action d'un moteur $M_1$ et à coulisser selon cet axe sous l'action d'un moteur $M_0$. De façon plus précise, les moteurs $M_0$ et $M_1$ sont montés sur une platine 80 à l'extrémité supérieure du bras 78, cette platine 80 étant immobili-

B 7889.3 GP

sée en translation par rapport à la colonne 78 et en rotation par rapport à l'extrémité 82 de l'ensemble porteur (non représenté). L'arbre de sortie vertical du moteur $M_1$ porte un pignon 84 qui s'engrène sur un pignon 86 solidaire de l'extrémité supérieure de la colonne 78 pour commander la rotation de celle-ci autour de son axe. D'autre part, l'arbre de sortie du moteur $M_0$ est solidaire d'une tige filetée 88 d'axe vertical, qui coopère avec un taraudage approprié formé dans l'extrémité 82, pour commander la translation de la colonne 78.

Une biellette 90 est articulée par un axe horizontal 92 sur la colonne 78 et la torche 66 est à son tour articulée sur la biellette 90 autour d'un axe parallèle à l'axe 92. Un moteur $M_2$ logé dans la colonne 78 entraîne en rotation, par l'intermédiaire de deux pignons coniques 94 et 96, l'axe 92 sur lequel est fixée la biellette 90. Un ensemble chaîne 98 et roues dentées 100, 102 ou tout dispositif équivalent, permet de transmettre le mouvement de rotation de l'axe 92 à l'axe portant la torche 66 et par lequel celle-ci est montée sur la biellette 90. De cette manière, il est possible de régler à volonté l'angle d'inclinaison $\theta_2$ de l'axe de la torche 66 par rapport à l'axe de la colonne 78, tout en maintenant en permanence l'extrémité de la torche dans l'alignement de cet axe.

Par rapport à l'application décrite précédemment en se référant à la figure 5, on remarque que la modification de l'angle $\theta_2$ a pour effet une modification de la distance entre l'extrémité de la torche et la surface qui doit être compensée en agissant sur le moteur $M_0$. Il en résulte au niveau du dispositif de supportage 18 selon l'invention que le maintien de la distance séparant le capteur de la surface des pièces en vis-à-vis nécessite d'agir sur le moteur $M_7$ (figure

B 7889.3 GP

0135434

3) pour compenser le déplacement de la platine 20 résultant de la mise en oeuvre du moteur $M_0$. A cet effet, le moteur $M_7$ doit être commandé pour réaliser une translation T d'amplitude égale et de sens inverse à la translation réalisée par le moteur $M_0$.

Par ailleurs, on voit sur la figure 6 que le montage du dispositif de supportage 18 sur l'ensemble de supportage 76 est réalisé de la même manière que dans l'application de la figure 5. En d'autres termes, la platine 20 est montée de façon tournante à l'extrémité inférieure de la colonne 78, la commande de la rotation de la platine 20 autour de l'axe vertical de la colonne étant réalisée à l'aide d'un moteur $M_3$ logé dans la colonne 78. Comme dans le cas de la figure 5, ce moteur permet d'orienter le capteur sur le joint et devant la torche.

Bien entendu, les applications qui viennent d'être décrites en se référant aux figures 4 à 6 ne sont pas limitatives et de nombreuses variantes peuvent y être apportées sans sortir du cadre de l'invention. De façon comparable, le mode de réalisation du dispositif de liaison selon l'invention décrit en se référant aux figures 2 et 3 peut subir différentes variantes sans sortir du cadre de l'invention.

## REVENDICATIONS

1. Dispositif de supportage d'un capteur (10) de suivi de joint (12) pour une machine automatique telle qu'une machine de soudage de deux pièces (14, 16) selon ce joint, asservie à une mesure de position du joint effectuée par ledit capteur, caractérisé en ce qu'il comprend une platine (20) de fixation du capteur sur la machine, des moyens ($M_4$, $M_7$, T) pour déplacer le capteur par rapport à la platine selon une première direction ($\overrightarrow{OZ}$) de mesure de hauteur, des moyens ($M_4$, $M_7$, T) pour déplacer le capteur par rapport à la platine selon une deuxième direction ($\overrightarrow{OY}$) de mesure de décalage latéral, perpendiculaire à la première direction ($\overrightarrow{OZ}$), et des moyens ($M_6$) pour faire pivoter le capteur autour d'un premier axe ($X_1X_1'$) orthogonal aux première et deuxième directions ($\overrightarrow{OZ}$ et $\overrightarrow{OY}$) et passant par un point lié au capteur.

2. Dispositif selon la revendication 1, caractérisé en ce que les moyens ($M_4$, $M_7$, T) pour déplacer le capteur par rapport à la platine selon la première et la deuxième directions ($\overrightarrow{OZ}$, $\overrightarrow{OY}$) comportent des moyens ($M_4$) pour faire pivoter le capteur autour d'un deuxième axe ($X_2X_2'$) sensiblement parallèle au premier axe ($X_1X_1'$) et plus éloigné du capteur que ce dernier.

3. Dispositif selon la revendication 2, caractérisé en ce qu'il comporte plusieurs pièces mobiles reliées entre elles successivement, de ladite platine (20) vers le capteur (10), par une articulation (21) de rotation autour du deuxième axe ($X_2X_2'$) par des moyens (25) de guidage en translation selon une troisième direction (AA') perpendiculaire au deuxième axe et par une articulation (27) de rotation autour du premier axe ($X_1X_1'$), les déplacements desdites pièces au niveau desdites articulations et des moyens de guidage étant com-

B 7889.3 GP

mandés par chacun desdits moyens ($M_4$, $M_7$, $M_6$) pour déplacer et pour faire pivoter le capteur.

4. Dispositif selon la revendication 3, caractérisé en ce qu'il comprend de plus des moyens ($M_5$) pour faire pivoter le capteur (10) autour d'un troisième axe (AA') perpendiculaire au premier ($X_1X_1'$) et au deuxième axes ($X_2X_2'$) et parallèle à ladite troisième direction.

5. Dispositif selon la revendication 4, caractérisé en ce qu'il comprend de plus, entre ladite articulation (21) de rotation autour du deuxième axe ($X_2X_2'$) et lesdits moyens (25) de guidage en translation, une articulation (23) de rotation autour du troisième axe (AA'), les déplacements desdites pièces autour de cette dernière articulation étant commandés par les moyens ($M_5$) pour faire pivoter le capteur autour du troisième axe.

6. Dispositif selon l'une quelconque des revendications 2 à 5, caractérisé en ce que des moyens ($C_4$, $C_7$) sont prévus pour mesurer les déplacements relatifs entre lesdites pièces au niveau desdites articulations (21, 23, 27) et des moyens (25) de guidage en translation.

7. Machine automatique comprenant un ensemble porteur définissant au moins trois degrés de liberté de positionnement, un ensemble de supportage (70,76) d'un outil (66) définissant au moins deux degrés de liberté d'orientation, ledit ensemble de supportage comprenant un bras (72, 78) d'axe vertical par lequel il est monté à l'extrémité (82) de l'ensemble porteur, et un dispositif (18) de supportage d'un capteur (10) selon l'une quelconque des revendications précédentes, caractérisée en ce que ladite platine (20) est montée sur ledit bras (72,78) de l'ensemble de supportage par une articulation de rotation autour de l'axe vertical

B 7889.3 GP

19                    0135434

du bras, des moyens (M$_3$) étant prévus pour faire pivoter le dispositif de supportage (18) autour de cet axe vertical.

8. Machine selon la revendication 7, caractérisée en ce que la platine (20) est montée à l'extrémité inférieure dudit bras (74,78) de l'ensemble de supportage (70, 76).

9. Machine automatique comprenant un ensemble porteur définissant au moins six degrés de liberté de positionnement et d'orientation combinés, un outil (66) monté à l'extrémité (68) dudit ensemble porteur, et un dispositif (18) de supportage d'un capteur (10) selon l'une quelconque des revendications précédentes, caractérisée en ce que le dispositif de supportage du capteur est fixé avec l'outil à l'extrémité (68) de l'ensemble porteur.

B 7889.3 GP

FIG. 1b

FIG. 1a

# FIG. 2

FIG. 3

FIG. 4

FIG. 5

FIG. 6

Office européen
des brevets

**RAPPORT DE RECHERCHE EUROPEENNE**

01.35434

Numéro de la demande

EP 84 40 1687

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl.4) |
|---|---|---|---|
| X | EP-A-0 064 603 (MESSER GRIESHEIM) <br> * résumé; figure 13 * | 1,3-7 | B 23 Q 35/24 <br> B 23 K 9/02 |
| X | GB-A-2 091 909 (HIRSCHMANN) <br> * figure 1; résumé; page 2, ligne 77 - fin * | 1,3 | |
| A | FR-A-2 521 051 (COMMISSARIAT A L'ENERGIE ATOMIQUE) | | |
| A | US-A-4 288 020 (BABCOCK) | | |
| A | US-A-2 507 310 (COMMISSARIAT A L'ENERGIE ATOMIQUE) | | |

DOMAINES TECHNIQUES RECHERCHES (Int. Cl.4)

B 23 Q 35/00
B 23 K 9/02

Le présent rapport de recherche a été établi pour toutes les revendications

| Lieu de la recherche <br> LA HAYE | Date d'achèvement de la recherche <br> 08-11-1984 | Examinateur <br> HOORNAERT W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille. document correspondant

OEB Form 1503. 03.82